# EUROPEAN PATENT SPECIFICATION

(11) **EP 2 411 248 B1**
(45) Date of publication and mention of the grant of the patent: **23.10.2013**
(21) Application number: 10710194.1
(22) Date of filing: 06.03.2010
(51) Int. Cl.: B60R 21/231

(54) **SIDE AIRBAG**
..
COUSSIN DE SÉCURITÉ GONFLABLE LATÉRAL

(30) Priority: 25.03.2009 DE 102009014302
(43) Date of publication of application: 01.02.2012
(73) Proprietor: Autoliv Development AB, 447 83 Vårgårda (SE)
(72) Inventor: ALENSPACH, Guillaume, F-76520 Boos (FR); DEMULDER, Damien, F-60000 Beauvais (FR)
(74) Representative: Schön, Thilo
(86) International application number: PCT/EP2010/001413
(87) International publication number: WO 2010/108590

(56) References cited:
- EP-A1- 1 332 929
- EP-A1- 1 873 024
- US-A- 5 586 782
- US-A1- 2004 130 127
- US-A1- 2006 001 244
- US-A1- 2006 022 439

## Description

### Technical field of the invention

The invention relates to a side airbag for protection of a vehicle occupant according to the preamble of claim 1 and to an airbag unit according to claim 11.

Airbags are generally well known in the vehicle industry and are provided in the vehicle for protection of vehicle occupants in a frontal, side or roll over crash of the vehicle. In case of sensing such a crash by a crash or pre-crash sensor one or several gas generators are triggered by a control device which fills the or each airbag with gas.

Side airbags are also well known and there are airbags used to protect occupants during a side impact or roll over accident. Those side airbags are usually mounted in the seat back of vehicle seats and inflate in position between the occupant and the side structure of the vehicle. Side airbags typically protect the head, thorax and/ or pelvic area of an occupant. It is also known to provide a so-called inflatable curtain airbag which is mounted in the roof rail portion of the vehicle and deploys downwards to cover the side windows.

### Prior art

GB 2 404 634 discloses a generic side airbag which is provided in the seat back of a vehicle seat. The side airbag comprises an inner airbag as a first chamber which is provided with an inflator. Several openings are provided in the peripheral wall of the inner airbag in order to let gas flow from the inner airbag into an outer airbag which forms a second chamber. According to an embodiment the second chamber can be divided in several cells in order to protect different regions of an occupant.

The side airbag in GB 2 404 634 is considered to give an occupant good side protection, but it is complicate to assemble and rather heavy weight with two airbags arranged inside each other.

The generic US 2004/013027 A1 shows a two chamber side airbag for the protection of the thorax and pelvis area of the occupant. The two chambers are separated by a dividing seam which has a horizontal and a vertical section, wherein the vertical section is located near the rear end of the airbag. The EP 1 873 024 A1 and the US 2006/0022439 A1 show similar side airbags.

The EP 1 332 929 A1 shows a side airbag for the protection of the thorax and the head of an occupant. Two separate chambers are provided, wherein the chamber allocated to the head of the occupant is filled from its front end.

The US 2006/0001244 A1 shows a side airbag with a lower chamber and an upper chamber. The upper chamber is at least partially allocated to the head of the occupant and shows a tether that connects the two side walls of the airbag.

The US 5,586,782 shows a side airbag with two chambers, wherein the top chamber can serve for the protection of the head of the occupant. Here, the top chamber is filled from its lower end.

For a side airbag to protect the head and thorax regions of an occupant there is further a problem to get such airbag in position passing the shoulder region of the occupant. There is usually only little space between the side structure of the vehicle and the shoulder of an occupant.

For solving the above mentioned problems a side airbag is provided with a dividing wall which is formed as dividing seam and the gas overflow passage is located between a top portion of the first chamber and a top portion of the second chamber. The gas overflow passage is formed between a top end of the dividing seam and the periphery seam of the side airbag. There is provided only a single gas overflow passage between first and second chambers.

Using a seam to divide first and second chambers is simple to produce and does not create extra weight. The location of the overflow passage at the top portion of the airbag brings the advantage that the first chamber can be inflated swiftly and the second chamber is inflated subsequently after the first chamber. The overflow passage is located above the shoulder region of an occupant. The second chamber can be positioned and is supported by the inflated first chamber.

To protect the thorax region of an occupant the bottom portion of the first chamber has a generally wide shape extending from the front portion to the rear portion of the side airbag. The first chamber extends from the bottom portion to the top portion and has a tapered shape with a generally narrow top portion. The narrower top portion enables the first chamber to be inflated very swiftly. The first chamber is provided with an inflator interface portion and it is inflatable by gas from an inflator.

In order to protect the head of an occupant the top portion of the second chamber has a generally wide shape extending from the front portion to the dividing seam. The second chamber extends from the top portion to the dividing seam and has a tapered shape with a generally narrow bottom portion. A vent opening can be formed in the bottom portion of the second chamber. Preferably the vent opening is located in the side airbag layer directing away from the occupant in the inflated condition of the side airbag in the vehicle. By doing this the occupant will not be treated with the hot exhaust gas from the vent opening.

During inflation of the side airbag the first chamber is inflated first in upward direction with gas from an inflator and subsequently the second chamber is inflated in downward direction with gas from the first chamber via the overflow passage.

Further preferred alternatives of the invention result from the subclaims and also from the embodiments which will now be described in more detail with reference to the figures. The drawings show:

### Brief description of the drawings

- Figure 1: A side view to a vehicle seat with an inflated side airbag,
- Figure 2: a side view to the side airbag of figure 1 in a partly inflated condition,
- Figure 3: a side view to the side airbag of figure 2 in fully inflated condition.

### Detailed description of preferred embodiments

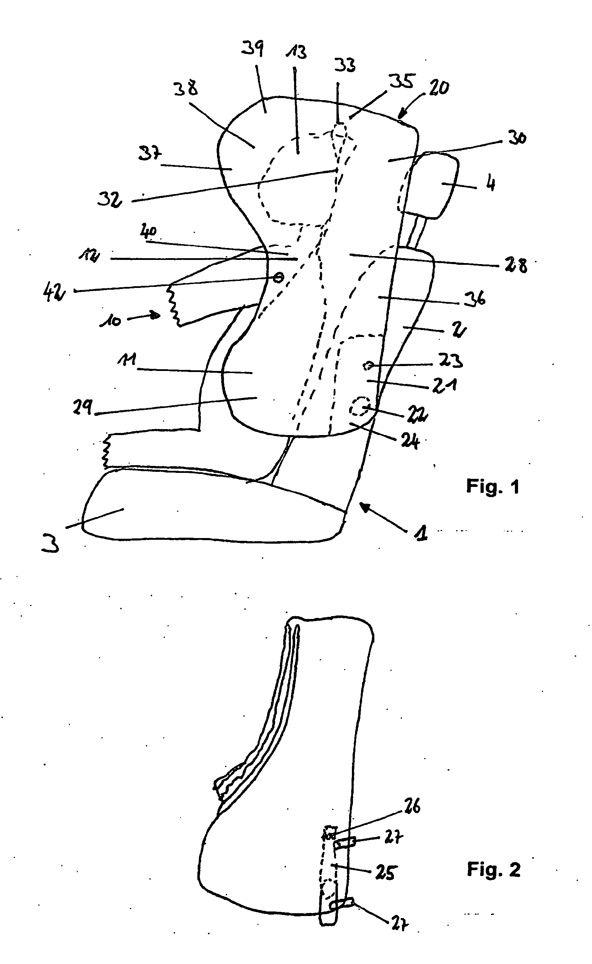

Figure 1 shows a vehicle seat 1 with a seat back 2, a seat pad 3 and a head rest 4. An occupant or respectively a dummy 10 is shown sitting on the seat 1.

Figure 1 also shows a side airbag 20 in the inflated condition. The side airbag 20 has a first chamber 28 which is provided with an interface portion 21 to an inflator which is not shown in figure 1 in order to improve the clarity of the figure. An inlet opening 22 is located in the inflator interface portion 21 into which an inflator 25 (see figure 2) may be inserted into the first chamber 28 at least partly. The inflator 25 may then be secured to the seat frame via studs 27, wherein a first stud 27 can project through the stud opening 23 and a second stud 27 may project through the inlet opening 22. In order to protect the airbag material from the hot inflator gas a heat protection panel 24 is arranged in the inflator interface portion 21 at least covering the fabric material in the area of the outlet openings 26 of the inflator 25.

The first chamber 28 extends from the bottom portion 29 to the top portion 30 of the first chamber 28 which is actually the bottom and the top of the side airbag 20. The bottom portion 29 has a relatively wide extension from front to rear portions in order to provide protection of the thorax region 11 of the occupant 10. The bottom portion 29 extends from the front portion 37 to the rear portion 36 of the side airbag 20. The first chamber 28 has a tapered shape from bottom to top and ends with a relatively narrow top portion 30.

Figure 2 shows a condition in which the first chamber 28 is inflated. After it has been inflated, gas will enter the gas overflow passage 35 between the top edge of the side airbag and the looped shaped top part 33 of the dividing seam 32 which extends substantially vertically through the side airbag 20 and divides the first chamber 28 from the second chamber 38. The top end 33 of the dividing seam 32 is formed as loop in order to create more robustness in the seam portion. Such loop 33 can better withstand the heat and force from the gas flow.

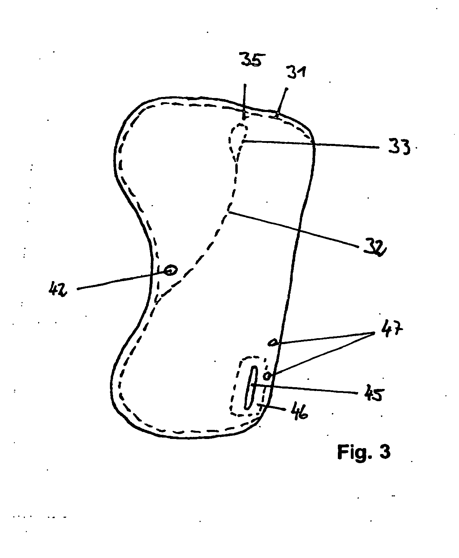

Figure 3 shows the side airbag 20 in fully inflated condition. The second chamber 38 extends from the top portion 39 in a tapered shape down to the bottom portion 40, wherein the top portion 39 extends from the front portion 37 of the side airbag 20 to the dividing seam 32. The top portion 39 has a relatively wide shape from front to rear in order to provide protection for the head 13 of an occupant 10. The top portion 39 of the second chamber 38 receives gas from the gas overflow passage 35 and the second chamber 38 is inflated starting at the top portion 39 down to the bottom portion 40. It is to be understood that the gas overflow passage 35 must be at the top portions 30, 39 of both first and second chambers 28, 38 and there is only such gas overflow passage 35 arranged between both chambers 28, 38. However, the invention will also work, if the gas flow passage 35 would be split into several overflow channels all arranged in the top portions 30, 39 of both chambers 28, 38 above the shoulder region 12 of the occupant 10. Those split gas channels would be considered as a single overflow passage 35 according to the invention.

Due to this sequence of inflation the shoulder 12 of the occupant 10 is by-passed, in that the first chamber 28 inflates rearwards the shoulder 12 - as shown in figure 1 - and the gas overflow passage 35 is located above the shoulder 12 in the inflated condition of the side airbag 20. The second chamber 38 inflates downwardly above and in front of the shoulder 12 - again as shown in figure 1. Therefore the shoulder 12 of the occupant 10 does not act as an obstacle for the deployment of the side airbag 20.

In the bottom portion 40 of the second chamber 38 a vent opening 42 is provided in order to release gas from the side airbag 20 during the contact between side airbag 20 and occupant 10 and to absorb energy. The vent 42 is located in the side wall away from the occupant 10 in order to avoid any contact of the occupant 10 with the hot gas.

In figure 3 there is shown an alternative type of inflator interface portion 21 with an inlet slit 45 to insert the inflator 25. The studs 27 can be exposed through stud holes 47 for attachment to the seat frame. A sealing panel 46 is provided to minimize any leakage through the inlet slit 45 during the inflation process.

The side airbag 20 of figure 3 is formed of a single so called "butterfly" fabric panel which is folded along an axis (not shown) extending along the rear portion 36 of the side airbag 20, so that a folded edge 48 is created at the rear portion. A periphery seam 31 arranged at the top, front and bottom portions of the side airbag and connects the two fabric layers in order to close the side airbag 20.

### List of reference numbers

- 1: Vehicle seat
- 2: Seat back
- 3: Seat pad
- 4: Head rest
- 10: Occupant
- 11: Thorax region of occupant
- 12: Shoulder region of occupant
- 13: Head of occupant
- 20: Side airbag
- 21: Inflator interface portion
- 22: Inlet opening
- 23: Stud opening
- 24: Heat protection panel
- 25: Inflator
- 26: Outlet openings
- 27: Studs
- 28: First chamber
- 29: Bottom portion (thorax protection)
- 30: Top portion
- 31: Periphery seam
- 32: Dividing seam
- 33: Loop
- 35: Overflow passage
- 36: Rear portion of side airbag
- 37: Front portion of side airbag
- 38: Second chamber
- 39: Top portion (head protection)
- 40: Bottom portion
- 42: Vent opening
- 45: Inlet slit
- 46: Sealing panel
- 47: Stud holes
- 48: Folded edge

## Claims

1. Side airbag (20) for protection of a vehicle occupant with a first elongate chamber (28) at the rear portion (36) of the side airbag (20) and a second chamber (38) at the front portion (37) of the side airbag (20), a divider (32) which is provided for dividing the first chamber (28) from the second chamber (38) extending substantially vertically through the side airbag (20), wherein an overflow passage (35) is provided to supply gas from the first chamber (28) into the second chamber (38),
wherein the divider is formed as a dividing seam (32),
wherein the bottom portion (29) of the first chamber (28) has a generally wide shape extending from the front portion (37) to the rear portion (36) of the side airbag (20),
wherein the top portion (39) of the second chamber (38) has a generally wide shape extending from the front portion (37) to the dividing seam (32),
and
wherein the gas overflow passage (35) is located between a top portion (30) of the first chamber (28) and a top portion (39) of the second chamber (38) and is formed between a top end (33) of the dividing seam (32) and the periphery seam (31) of the side airbag (20),
**characterized in that**
the gas overflow passage (35) is located completely above the shoulder region (12) of the occupant (10),
the bottom portion (29) of the first chamber (28) is designed to protect a thorax region (11) of an occupant (10) and
the top portion (39) of the second chamber (38) is designed to protect a head (13) of an occupant (10).

2. Side airbag according to claim 1, wherein the first chamber (28) extends from the bottom portion (29) to the top portion (30) and has a tapered shape with a generally narrow top portion (30).

3. Side airbag according to claim 2, wherein the first chamber (28) is provided with an inflator interface portion (21) and it is inflatable by gas from an inflator (25).

4. Side airbag according to one of the preceding claims, wherein the second chamber (38) extends from the top portion (39) to the dividing seam (32) and has a tapered shape with a generally narrow bottom portion (40).

5. Side airbag according claim 4, wherein a vent opening (42) is formed in the bottom portion (40) of the second chamber (38).

6. Side airbag according to claim 5, wherein the vent opening (42) is located in the side airbag layer directing away from the occupant (10) in the inflated condition of the side airbag (20) in the vehicle.

7. Side airbag unit for protection of a vehicle occupant with a side airbag (20) according to one of the preceding claims and an inflator (25) for supplying the side airbag (25) with gas.

8. Side airbag unit according to claim 7, wherein during inflation of the side airbag (20) the first chamber (28) is inflated first in upward direction with gas from the inflator (25) and subsequently the second chamber (38) is inflated in downward direction with gas from the first chamber (28) via the overflow passage (35).

## Patentansprüche

1. Seitenairbag (20) zum Schutz eines Fahrzeuginsassen mit einer ersten länglichen Kammer (28) am hinteren Abschnitt (36) des Seitenairbags (20) und einer zweiten Kammer (38) am vorderen Abschnitt (37) des Seitenairbags (20), wobei ein Trennelement (32), das zum Trennen der ersten Kammer (28) von der zweiten Kammer (38) vorgesehen ist, im Wesentlichen senkrecht durch den Seitenairbag (20) verläuft, wobei ein Überströmkanal (35) vorgesehen ist, um der zweiten Kammer (38) Gas aus der ersten Kammer (28) zuzuführen,
wobei das Trennelement als Trennnaht (32) geformt ist,
wobei der untere Abschnitt (29) der ersten Kammer (28) eine ganz allgemein breite Form aufweist, die von dem vorderen Abschnitt (37) zum hinteren Abschnitt (36) des Seitenairbags (20) verläuft,
wobei der obere Abschnitt (39) der zweiten Kammer (38) eine ganz allgemein breite Form aufweist, die von dem vorderen Abschnitt (37) zur Trennnaht (32) verläuft, und
wobei der Gasüberströmkanal (35) zwischen einem oberen Abschnitt (30) der ersten Kammer (28) und einem oberen Abschnitt (39) der zweiten Kammer (38) angeordnet ist und zwischen einem oberen Ende (33) der Trennnaht (32) und der Umfangsnaht (31) des Seitenairbags (20) geformt ist,
**dadurch gekennzeichnet, dass**
der Gasüberströmkanal (35) vollständig über dem Schulterbereich (12) des Insassen (10) angeordnet ist,
der untere Abschnitt (29) der ersten Kammer (28) so ausgestaltet ist, dass er einen Brustbereich (11) eines Insassen (10) schützt, und
der obere Abschnitt (39) der zweiten Kammer (38) so ausgestaltet ist, dass er einen Kopf (13) eines Insassen (10) schützt.

2. Seitenairbag nach Anspruch 1, wobei die erste Kammer (28) vom unteren Abschnitt (29) zum oberen Abschnitt (30) verläuft und eine verjüngte Form mit einem im Allgemeinen schmalen oberen Abschnitt (30) aufweist.

3. Seitenairbag nach Anspruch 2, wobei die erste Kammer (28) mit einem Gasgenerator-Kopplungsabschnitt (21) versehen ist und sie mit Gas von einem Gasgenerator (25) aufblasbar ist.

4. Seitenairbag nach einem der vorhergehenden Ansprüche, wobei die zweite Kammer (38) vom oberen Abschnitt (39) zur Trennnaht (32) verläuft und eine verjüngte Form mit einem im Allgemeinen schmalen unteren Abschnitt (40) aufweist.

5. Seitenairbag nach Anspruch 4, wobei eine Ablassöffnung (42) im unteren Abschnitt (40) der zweiten Kammer (38) geformt ist.

6. Seitenairbag nach Anspruch 5, wobei die Ablassöffnung (42) in der Seitenairbagschicht angeordnet ist, die im aufgeblasenen Zustand des Seitenairbags (20) im Fahrzeug von dem Insassen (10) weg gerichtet ist.

7. Seitenairbageinheit zum Schutz eines Fahrzeuginsassen mit einem Seitenairbag (20) nach einem der vorhergehenden Ansprüche und einem Gasgenerator (25) zum Versorgen des Seitenairbags (25) mit Gas.

8. Seitenairbageinheit nach Anspruch 7, wobei während des Aufblasens des Seitenairbags (20) die erste Kammer (28) zuerst in der Aufwärtsrichtung mit Gas von dem Gasgenerator (25) aufgeblasen wird und anschließend die zweite Kammer (38) in der Abwärtsrichtung mit Gas aus der ersten Kammer (28) über den Überströmkanal (35) aufgeblasen wird.

## Revendications

1. Coussin de sécurité gonflable latéral (20) pour la protection d'un passager d'un véhicule comprenant une première chambre allongée (28) dans la partie arrière (36) du coussin de sécurité gonflable latéral (20) et une seconde chambre (38) dans la partie avant (37) du coussin de sécurité gonflable latéral (20), un élément de séparation (32) qui est prévu pour séparer la première chambre (28) de la seconde chambre (38) s'étendant essentiellement verticalement à travers le coussin de sécurité gonflable latéral (20), dans lequel un canal de trop-plein (35) est prévu pour alimenter du gaz venant de la première chambre (28) dans la seconde chambre (38),
dans lequel l'élément de séparation est formé en tant que couture de séparation (32),
dans lequel la partie inférieure (29) de la première chambre (28) présente une forme généralement large s'étendant de la partie avant (37) à la partie arrière (36) du coussin de sécurité gonflable latéral (20),
dans lequel la partie supérieure (39) de la seconde chambre (38) présente une forme généralement large s'étendant de la partie avant (37) à la couture de séparation (32), et
dans lequel le canal de trop-plein de gaz (35) est situé entre une partie supérieure (30) de la première chambre (28) et une partie supérieure (39) de la seconde chambre (38) et est formé entre une extrémité supérieure (33) de la couture de séparation (32) et la couture périphérique (31) du coussin de sécurité gonflable latéral (20),
**caractérisé en ce que**
le canal de trop-plein de gaz (35) est situé complètement au-dessus de la région des épaules (12) du passager (10),
la partie inférieure (29) de la première chambre (28) est conçue pour protéger une région thoracique (11) d'un passager (10) et
la partie supérieure (39) de la seconde chambre (38) est conçue pour protéger une tête (13) d'un passager (10).

2. Coussin de sécurité gonflable latéral selon la revendication 1, dans lequel la première chambre (28) s'étend de la partie inférieure (29) à la partie supérieure (30) et présente une forme à section décroissante avec une partie supérieure (30) généralement étroite.

3. Coussin de sécurité gonflable latéral selon la revendication 2, dans lequel la première chambre (28) est dotée d'une partie d'interface de gonfleur (21) et elle peut être gonflée par du gaz venant d'un gonfleur (25).

4. Coussin de sécurité gonflable latéral selon l'une des revendications précédentes, dans lequel la seconde chambre (38) s'étend de la partie supérieure (39) à la couture de séparation (32) et présente une forme à section décroissante avec une partie inférieure (40) généralement étroite.

5. Coussin de sécurité gonflable latéral selon la revendication 4, dans lequel une ouverture d'évent (42) est formée dans la partie inférieure (40) de la seconde chambre (38).

6. Coussin de sécurité gonflable latéral selon la revendication 5, dans lequel l'ouverture d'évent (42) est située dans la couche du coussin de sécurité gonflable latéral orientée dans la direction opposée à celle du passager (10) dans le véhicule dans l'état gonflé du coussin de sécurité gonflable latéral (20).

7. Unité de coussin de sécurité gonflable latéral pour la protection d'un passager d'un véhicule comprenant un coussin de sécurité gonflable latéral (20) selon l'une des revendications précédentes et un gonfleur (25) pour alimenter en gaz le coussin de sécurité gonflable latéral (20).

8. Unité de coussin de sécurité gonflable latéral selon la revendication 7, dans lequel pendant le gonflage du coussin de sécurité gonflable latéral (20), la première chambre (28) est gonflée d'abord dans la direction vers le haut avec du gaz venant du gonfleur (25) et ensuite la seconde chambre (38) est gonflée dans la direction vers le bas avec du gaz venant de la première chambre (28) via le canal de trop-plein (35).
